# EUROPEAN PATENT SPECIFICATION

(11) **EP 2 782 386 B1**
(45) Date of publication and mention of the grant of the patent: **11.09.2019**
(21) Application number: 12850347.1
(22) Date of filing: 07.08.2012
(51) Int. Cl.: H04W 36/00, H04W 4/18, H04W 76/22, H04L 29/06

(54) **METHOD AND SYSTEM FOR SRVCC HANDOVER**
VERFAHREN UND SYSTEM ZUR SRVCC-ÜBERGABE
PROCÉDÉ ET SYSTÈME DE TRANSFERT SRVCC

(30) Priority: 17.11.2011 CN 201110364959
(43) Date of publication of application: 24.09.2014
(73) Proprietor: ZTE Corporation, Shenzhen, Guangdong 518057 (CN)
(72) Inventor: ZHANG, Lu, Shenzhen Guangdong 518057 (CN); GAO, Yang, Shenzhen Guangdong 518057 (CN)
(74) Representative: Aipex B.V.
(86) International application number: PCT/CN2012/079781
(87) International publication number: WO 2013/071776

(56) References cited:
- CN-A- 101 841 836
- CN-A- 102 088 681
- CN-A- 102 448 135
- US-A1- 2007 140 293
- US-A1- 2007 171 841
- "3rd Generation Partnership Project; Technical Specification Group Core Network and Terminals; Out of band transcoder control; Stage 2 (Release 10)", 3GPP STANDARD; 3GPP TS 23.153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 4 April 2011 (2011-04-04), pages 1-103, XP050476911, [retrieved on 2011-04-04]
- 3GPP: "3rd Generation Partnership Project; Technical Specification Group Services and System Aspects; Feasibility Study of Single Radio Voice Call Continuity (SRVCC) from UTRAN/GERAN to E-UTRAN/HSPA; Stage 2 (Release 11)", 3GPP DRAFT; 23885-B00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, 5 October 2011 (2011-10-05), XP050548000, [retrieved on 2011-10-05]
- '3rd Generation Partnership Project; Technical Specification Group Core Network and Terminals; Out of band transcoder control; stage 2 (release 10)' 3GPP TS 23.153 V10.0.0 March 2011, XP050476911

## Description

### Technical Field

The present document relates to the field of communications, and in particular, to a method and system for single radio voice continuity handover.

### Background of the Related Art

An IP Multimedia Subsystem (IMS) is a development direction of future multimedia communication, and is also the most important component of the next generation network. It is a subsystem supporting IP multimedia services proposed by the Third Generation Partnership Project (3GPP). Single Radio Voice Call Continuity (SRVCC) is a function of implementing voice handover between the IMS and the Circuit-Switched (CS) for a radio user in a condition of a single radio. SRVCC corresponds to a UE of the single radio, i.e., the UE can only use one of a radio of 2G/3G and a radio of Long Term Evolution (LTE) at a same moment, and the requirements of the single radio are proposed by a terminal manufacturer, and its purpose is to multiplex the radios and related circuits of the 2G/3G and LTE networks. The particular attributes of the SRVCC due to the single radio are that the handover between the radios is very fast, but before the handover, it needs to establish a CS related channel at a network side and complete an update of a remote end. For the SRVCC handover, in a procedure design, the creation of the CS channel and the remote update are firstly performed, and then the Packet-Switched (PS) to CS handover is performed; and in a roaming condition, time for the remote update is in seconds. During high-speed mobility, the PS related radio (such as LTE radio) of the user attenuates quickly, and possibly before a PS to CS handover instruction is transmitted, the PS related radio has attenuated completely, and it is impossible to complete the handover. In normal conditions, the remote update in seconds will result in a certain media clip, and cause bad user experience (if it is over 200ms, it can be perceived by the user).

The 3GPP proposes a concept of Enhanced Single Radio Voice Call Continuity (E-SRVCC) to solve the above scheme of reducing handover time: new Access Transfer Control Function (ATCF) and ATGW are introduced to anchor a call to the ATCF, which reduces a handover distance and reduces a signaling transmission time of the remote update. As there is possibility of E-SRVCC handover, if there is no intersection between the codec used by the E-SRVCC user on the audio when a call is established with a remote end in the PS and the codec of the Media GateWay (MGM) through which the call is established finally in the CS, the ATGW needs to perform a corresponding trasncoding operation in a process of handover, and even if there is an intersection between the codec supported by the remote user and the codec supported by the MGW at this time, it will generate an unnecessary transcoding

3GPP DRAFT; 23885-B00 vol. SA WG2, 5 October 2011 discloses SRVCC HO in which the ACTF is aware of the voice codec which was negotiated with the UE prior to the SRVCC.

3GPP TS 23.153 no. V10.0.0, 4 April 2011 discloses that MGWs are recommended to support 2G codecs in order to avoid modifications during handover between 2G and 3G.

US 2007/171841 A1 discloses negotiating codecs involving calling party, called party and MGW to avoid transcoding.

### Summary of the Invention

The embodiments of the present document provide a method and system for single radio voice continuity handover, which avoids the problem of frequently transcoding in the prior art.

In order to solve the above technical problem, the present document uses the following technical solutions.

A method for single radio voice continuity handover is provided according to claim 1.

A system for single radio voice continuity handover is provided according to claim 2.

The calling party and/or the called party can be further configured to cancel the transcoding process after the negotiation of the media codec type is successful.

The embodiments of the present document provide a method and system for single radio voice continuity handover as defined by the claims, comprising performing communication based on a media codec type negotiated by a calling party and a called party in a process of handing over a voice service from a first network to a second network, wherein the negotiated media codec type is a media codec type supported by a MGM. In addition to maintaining the function of original high-speed handover of the E-SRVCC, the present application also avoids a process of frequently transcoding, reduces occupation of the transcoding resources in the ATGW, and enhances the utilization efficiency of the ATGW.

### Brief Description of Drawings

Fig, 1 is a flowchart of a call establishment phase before single radio voice continuity handover according to an embodiment of the present document;
Fig. 2 is a flowchart of a phase of single radio voice continuity handover according to the embodiment illustrated in Fig. 1; and
Fig. 3 is a flowchart of a method for single radio voice continuity handover according to another embodiment of the present document.

### Preferred Embodiments of the Invention

A method for single radio voice continuity handover, comprising: performing communication based on a media codec type negotiated by a calling party and a called party in a process of handing over a voice service from a first network to a second network, wherein the negotiated media codec type is a media codec type supported by an MGW.

The step of negotiating the media codec type by the calling party and the called party may be performed before handing over a voice service from a first network to a second network, or may also be performed during transcoding in the process of handing over a voice service from a first network to a second network.

The present document will be further described in detail below through specific embodiments in combination with accompanying drawings.

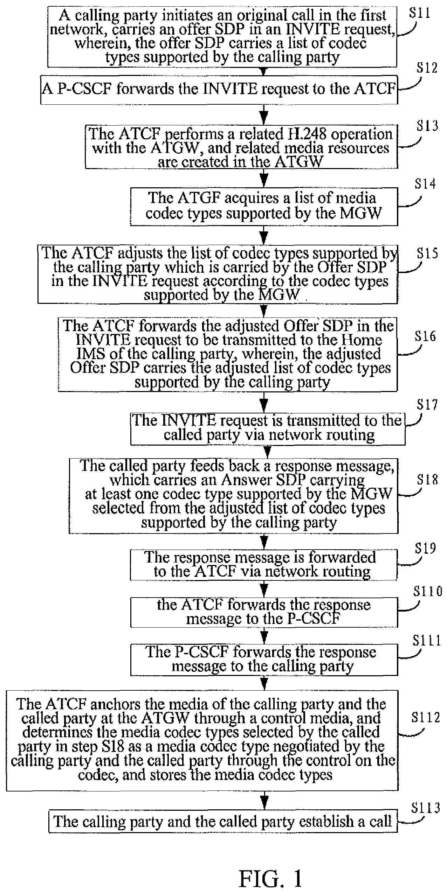

The embodiment will be described by taking negotiation of media codec type when an SRVCC user creates an original call in a first network as an example. Fig. 1 is a flowchart of a call establishment phase before single radio voice continuity handover according to an embodiment of the present document. Please refer to Fig. 1.

In step S11, a calling party (an SRVCC user) initiates an original call in the first network, carries an offer Session Description Protocol (SDP) in an INVITE request, wherein, the offer SDP carries a list of codec types supported by the calling party.

In step S12, a Proxy-Call Control Function (P-CSCF) forwards the INVITE request to the ATCF;
In step S13, the ATCF performs a related H.248 operation with the ATGW, and related media resources are created in the ATGW.

In step S14, the ATGF acquires a list of media codec types supported by the MGW, wherein, the acquisition mode may be interacting with the MGW and acquiring the list from the MGW, or may also be the ATCF configuring locally etc.;
In step S15, the ATCF adjusts the list of codec types supported by the calling party which is carried by the Offer SDP in the INVITE request according to the codec types supported by the MGW.

The mode of adjusting the list of codec types supported by the calling party comprises: comparing the list of codec types supported by the calling party with the list of codec types supported by the MGW; and arranging the same codec types in the both lists in the front of the list of codec types supported by the calling party. The ATCF adjusts the arrangement order of the codec in the list of codec types supported by the calling party, and reasonably guides the calling party and the called party to preferentially select the codec types supported by the MGW when the calling party and the called party perform media negotiation.

In order to avoid the situation that the actually negotiated codec types are codec types not supported by the MGW due to some terminals not preferentially selecting the codec types which are arranged in the front, the codec types not supported by the MGW may be deleted from the list of codec types supported by the calling party in a condition of knowing that the codec types supported by the called party include at least one codec type which is the same in the above both lists, only codec types supported by the MGW are left, i.e., the ATCF only carries the media types which are also supported by the MGW in the list of codec types supported by the calling party in the forwarded Offer SDP, that is, only carrying a codec type which is the same in the above both lists. There are many modes for knowing the codec types supported by the called party, for example, a number segment may be analyzed according to a number of the called party, to know the codec types supported by the called party.

In step S16, the ATCF forwards the adjusted Offer SDP in the INVITE request to be transmitted to the Home IMS of the calling party (a home domain of the calling party), wherein, the adjusted Offer SDP carries the adjusted list of codec types supported by the calling party.

In step S17, the INVITE request is transmitted to the called party (for example, the remote user) via network routing (for example, from the home domain of the calling party to the home domain of the called party, to a visited domain of the called party).

In step S18, the called party feeds back a response message (200 OK or 18x etc.), which carries an Answer SDP carrying at least one codec type supported by the MGW selected from the adjusted list of codec types supported by the calling party.

In step S19, the response message is forwarded to the ATCF via network routing (for example, the Home IMS of the called party, the Home IMS of the calling party).

In step S110, the ATCF forwards the response message to the P-CSCF.

In step S111, the P-CSCF forwards the response message to the calling party.

In step S112, the ATCF anchors the media of the calling party and the called party at the ATGW through a control media, and determines the media codec types selected by the called party in step S18 as a media codec type negotiated by the calling party and the called party through the control on the codec, and stores the media codec types, to facilitate continuously using the media codec type subsequently in the process of handing over the voice service from the first network to the second network.

In step S113, the calling party and the called party establish a call.

In step S18, if there occurs an abnormal condition (if some terminals do not preferentially select the codec types arranged in the front), which results in that the media codec types selected by the called party are not the codec types supported by the MGW, it means that the codec types used by the called party are different from the codec types supported by the MGW, and therefore, related transcoding resources may be previously reserved at the ATGW, and when there occurs an abnormal condition, the ATCF controls the ATGW to start a remedial measure for transcoding.

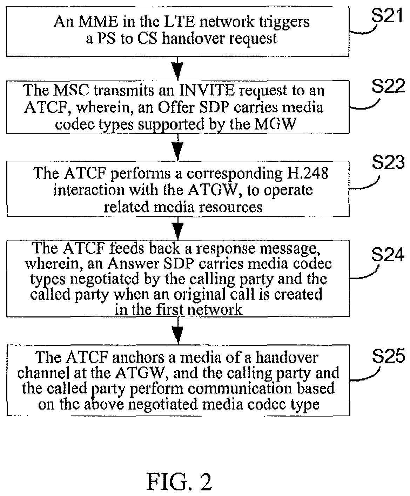

Fig. 2 is a flowchart of a phase of single radio voice continuity handover according to the embodiment illustrated in Fig. 1. Please refer to Fig. 2.

In step S21, a Mobility Management Entity (MME) in the LTE network triggers a PS to CS handover request (for example, the first network is a PS, and the second network is a CS).

In step S22, the MSC transmits an INVITE request to an ATCF, wherein, the INVITE request carries an Offer SDP carrying media codec types supported by the MGW.

In step S23, the ATCF performs a corresponding H.248 interaction with the ATGW, to operate related media resources.

In step S24, the ATCF feeds back a response message, which carries an Answer SDP carrying media codec types negotiated by the calling party and the called party when an original call is created in the first network.

In step S25, the ATCF anchors a media of a handover channel at the ATGW, and the calling party and the called party perform communication based on the above negotiated media codec type, to implement handover of a voice service from the first network to the second network without transcoding by the ATGW.

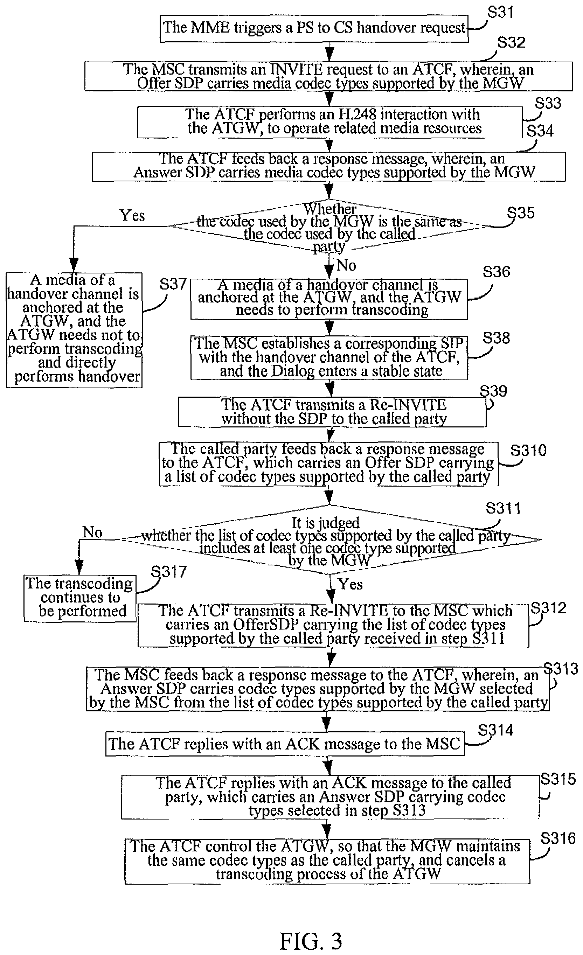

The embodiment will be described by taking negotiation of media codec type during transcoding in a process of handing over a voice service from a first network to a second network as an example. Fig. 3 is a flowchart of a method for single radio voice continuity handover according to another embodiment of the present document. Please refer to Fig. 3.

In step S31, the MME triggers a PS to CS handover request.

In step S32, the MSC transmits an INVITE request to an ATCF, which carries an Offer SDP carrying media codec types supported by the MGW.

In step S33, the ATCF performs a corresponding H.248 interaction with the ATGW, to operate related media resources.

In step S34, the ATCF feeds back a response message which carries an Answer SDP carrying media codec types supported by the MGW.

In step S35, it is determined whether the codec used by the MGW is the same as the codec used by the called party (a remote user), and if not, it is to proceed to step S36, and if so, it is to proceed to step S37.

In step S36, a media of a handover channel is anchored at the ATGW, and as the codec used by the MGW is different from the codec used by the called party, the ATGW needs to perform transcoding and it is to proceed to step S38.

In step S37, a media of a handover channel is anchored at the ATGW, and as the codec used by the MGW is the same as the codec used by the called party, the ATGW needs not to perform transcoding at this time and directly performs handover.

In step S38, the MSC establishes a corresponding Session Initiation Protocol (SIP) with the handover channel of the ATCF, and the Dialog enters a stable state.

In step S39, the ATCF transmits a Re-INVITE without the SDP to the called party to acquire a media capability of the called party.

In step S310, the called party feeds back a response message to the ATCF, which carries an Offer SDP carrying a list of codec types supported by the called party.

In step S311, the ATCF judges whether the list of codec types supported by the called party includes at least one codec type supported by the MGW, and if so, it is to proceed to step S312; otherwise, it is to proceed to step S317.

In step 312, the end-to-end (remote UE-MGW) negotiation is performed again, and the ATCF transmits a Re-INVITE to the MSC which carries an Offer SDP carrying the list of codec types supported by the called party received in step S311.

In step S313, the MSC feeds back a response message to the ATCF, which carries an Answer SDP carrying codec types supported by the MGW selected by the MSC from the list of codec types supported by the called party.

In step S314, the ATCF replies with an ACK message to the MSC.

In step S315, the ATCF replies with an ACK message to the called party, which carries an Answer SDP carrying codec types selected in step S313.

In step S316, the ATCF control the ATGW, so that the MGW maintains the same codec types as the called party, and cancels a transcoding process of the ATGW.

In step S317, in this session, as there is no intersection between the codec used by the MGW and the codec used by the called party, it needs to continuously use the transcoding resources for transcoding.

In the embodiment, during transcoding in a process of handing over a voice service from a first network to a second network, the media codec type is negotiated, and after the negotiation is successful, the transcoding process is cancelled, which reduces the use of transcoding resources.

The embodiments of the present document further provide a system for single radio voice continuity handover, comprising a calling party and a called party, wherein, the calling party and the called party are configured to negotiate a media codec type, and perform communication based on a negotiated media codec type in a process of handing over a voice service from a first network to a second network, wherein the negotiated media codec type is a media codec type supported by an MGW.

Further, the calling party and the called party are configured to negotiate the media codec type when creating an original call in the first network.

Alternatively, the calling party and the called party are configured to negotiate the media codec type during transcoding in the process of handing over the voice service from the first network to the second network.

Further, the calling party and/or the called party are further configured to cancel the transcoding process after the negotiation is successful.

The above contents are further specific descriptions which are made on the present document in conjunction with the specific embodiments; however, the specific implementation of the present document cannot be considered as only being limited to these descriptions. For those of ordinary skill in the technical field to which the present document belongs, on the premise of not departing from the concept of the present document, a number of simple deductions or substitutions can also be made, within the scope of the appended claims.

### Industrial Applicability

In addition to maintaining the function of original high-speed handover of the E-SRVCC, the present application also avoids a process of frequently transcoding, reduces occupation of the transcoding resources in the ATGW, and enhances the utilization efficiency of the ATGW.

## Claims

1. A method for a single radio voice continuity, SRVCC, handover, comprising:
before handing over by SRVCC a voice service call from a first packet switched PS network to a second cirtcuit switched CS network, when creating an original call between a calling party and a called party in the first network, the calling party transmitting (S11-S12) a list of codec types supported by itself to an Access Transfer Control Function, ATCF;
the ATCF adjusting (S15) the list of codec types supported by the calling party according to codec types supported by a media gateway, MGW through which the call will be established in the CS network by: comparing the list of codec types supported by the calling party with the list of codec types supported by the MGW, and in a condition of knowing that the codec types supported by the called party includes at least one codec type supported by the MGW, deleting the codec types not supported by the MGW from the list of codec types supported by the calling party, leaving only codec types supported by the MGW, and forwarding (S16-S17) the adjusted list of codec types to the called party; and,
the called party selecting (S18) at least one codec type from the adjusted list of codec types, and informing (S18-S112) the calling party of the selected codec type, wherein the codec type selected by the called party is the media codec type negotiated by the calling party and the called party;
in a process of handing over by SRVCC the voice service call from the first network to the second network, the calling party and the called party performing (S21-S25) communication based on the media codec type negotiated by the calling party and the called party;
wherein both the calling party and the called party are SRVCC users.

2. A system for a single radio voice continuity, SRVCC, handover, comprising a calling party, a called party and an Access Transfer Control Function, ATCF, wherein, before handing over by SRVCC a voice service call from a first packet switched PS network to a second circuit switched CS network, when creating an original call between a calling party and a called party in the first network,
the calling party is configured to transmit a list of codec types supported by itself to the ATCF;
the ATCF is configured to adjust the list of codec types supported by the calling party according to codec types supported by a media gateway, MGW through which the call will be established in the CS network, by: comparing the list of codec types supported by the calling party with the list of codec types supported by the MGW, and in a condition of knowing that the codec types supported by the called party includes at least one codec type supported by the MGW, deleting the codec types not supported by the MGW from the list of codec types supported by the calling party, leaving only codec types supported by the MGW, and forward the adjusted list of codec types to the called party;
the called party is configured to select at least one codec type from the adjusted list of codec types, and inform the calling party of the selected codec type, wherein the codec type selected by the called party is the media codec type negotiated by the calling party and the called party; and in a process of handing over by SRVCC the voice service call from the first network to the second network, the calling party and the called party are configured to perform communication based on the negotiated media codec type;
wherein both the calling party and the called party are SRVCC users.

## Patentansprüche

1. Verfahren für eine Single-Radio-Voice-Continuity(SRVCC)-Übergabe, umfassend:
vor dem Übergeben durch SRVCC eines Sprachdienst-Anrufs von einem ersten paketvermittelten PS-Netzwerk an ein zweites leitungsvermitteltes CS-Netzwerk, wenn ein Originalanruf zwischen einem anrufenden Teilnehmer und einem angerufenen Teilnehmer im ersten Netzwerk erzeugt wird, Übertragen (S11-S12) durch den anrufenden Teilnehmer einer Liste von Codec-Typen, die von ihm selbst unterstützt werden, an eine Access Transfer Control Function, ATCF;
Anpassen (S15) durch die ATCF der Liste von Codec-Typen, die von dem anrufenden Teilnehmer unterstützt werden, gemäß den Codec-Typen, die von einem Media Gateway, MGW, unterstützt werden, über den der Anruf in dem CS-Netzwerk eingerichtet werden wird, durch: Vergleichen der Liste von Codec-Typen, die von dem anrufenden Teilnehmer unterstützt werden, mit der Liste von Codec-Typen, die von dem MGW unterstützt werden, und, falls festgestellt wird, dass die Codec-Typen, die von dem angerufenen Teilnehmer unterstützt werden, mindestens einen Codec-Typen beinhalten, der von dem MGW unterstützt wird, Löschen der Codec-Typen, die nicht von dem MGW unterstützt werden, von der Liste der Codec-Typen, die von dem anrufenden Teilnehmer unterstützt werden, sodass nur Codec-Typen übrigbleiben, die von dem MGW unterstützt werden, und Weiterleiten (S16-S17) der angepassten Liste von Codec-Typen an den angerufenen Teilnehmer; und
Auswählen (S18) durch den angerufenen Teilnehmer mindestens eines Codec-Typen aus der angepassten Liste von Codec-Typen und Informieren (S18-S112) des anrufenden Teilnehmers über den ausgewählten Codec-Typen, wobei der Codec-Typ, der von dem angerufenen Teilnehmer ausgewählt wird, der Media-Codec-Typ ist, der von dem anrufenden Teilnehmer und dem angerufenen Teilnehmer ausgehandelt wurde;
in einem Verfahren der Übergabe durch SRVCC des Sprachdienst-Anrufs von dem ersten Netzwerk an das zweite Netzwerk, Durchführen (S21-S25) durch den anrufenden Teilnehmer und den angerufenen Teilnehmer von Kommunikation basierend auf dem Media-Codec-Typen, der von dem anrufenden Teilnehmer und dem angerufenen Teilnehmer ausgehandelt wurde;
wobei sowohl der anrufende Teilnehmer als auch der angerufene Teilnehmer SRVCC-Benutzer sind.

2. Verfahren für eine Single-Radio-Voice-Continuity(SRVCC)-Übergabe, umfassend einen anrufenden Teilnehmer, einen angerufenen Teilnehmer und eine Access Transfer Control Function, ATCF, wobei,
vor dem Übergeben durch SRVCC eines Sprachdienst-Anrufs von einem ersten paketvermittelten PS-Netzwerk an ein zweites leitungsvermitteltes CS-Netzwerk, wenn ein Originalanruf zwischen einem anrufenden Teilnehmer und einem angerufenen Teilnehmer im ersten Netzwerk erzeugt wird,
der anrufende Teilnehmer konfiguriert ist, eine Liste von Codec-Typen, die von ihm selbst unterstützt werden, an die ATCF zu übermitteln;
die ATCF konfiguriert ist, um die Liste der Codec-Typen, die von dem anrufenden Teilnehmer unterstützt werden, gemäß den Codec-Typen anzupassen, die von einem Media Gateway, MGW, unterstützt werden, durch den der Anruf in dem CS-Netzwerk eingerichtet werden wird, durch: Vergleichen der Liste von Codec-Typen, die von dem anrufenden Teilnehmer unterstützt werden, mit der Liste von Codec-Typen, die von dem MGW unterstützt werden, und, falls festgestellt wird, dass die Codec-Typen, die von dem angerufenen Teilnehmer unterstützt werden, mindestens einen Codec-Typen beinhalten, der von dem MGW unterstützt wird, Löschen der Codec-Typen, die nicht von dem MGW unterstützt werden, von der Liste der Codec-Typen, die von dem anrufenden Teilnehmer unterstützt werden, sodass nur Codec-Typen übrigbleiben, die von dem MGW unterstützt werden, und die angepasste Liste von Codec-Typen an den angerufenen Teilnehmer weiterzuleiten;
wobei der angerufene Teilnehmer konfiguriert ist, mindestens einen Codec-Typen aus der angepassten Liste von Codec-Typen auszuwählen und den anrufenden Teilnehmer über den ausgewählten Codec-Typen zu informieren, wobei der Codec-Typ, der von dem angerufenen Teilnehmer ausgewählt wird, der Media-Codec-Typ ist, der von dem anrufenden Teilnehmer und dem angerufenen Teilnehmer ausgehandelt wurde; und
wobei in einem Verfahren der Übergabe durch SRVCC des Sprachdienst-Anrufs von dem ersten Netzwerk an das zweite Netzwerk der anrufende Teilnehmer und der angerufene Teilnehmer konfiguriert sind, Kommunikation basierend auf dem ausgehandelten Media-Codec-Typen durchzuführen;
wobei sowohl der anrufende Teilnehmer als auch der angerufene Teilnehmer SRVCC-Benutzer sind.

## Revendications

1. Procédé de transfert à continuité vocale radio unique, SRVCC, comprenant :
avant un transfert par SRVCC d'un appel de service vocal d'un premier réseau à commutation de paquets PS à un second réseau à commutation de circuits CS, lors de la création d'un appel d'origine entre un appelant et un appelé dans le premier réseau, l'appelant transmettant (S11-S12) une liste de types de codec pris en charge par lui-même à une fonction de commande de transfert d'accès, ATCF ;
l'ATCF ajustant (S15) la liste de types de codec pris en charge par l'appelant conformément aux types de codec pris en charge par une passerelle multimédia, MGW, à travers laquelle la communication sera établie dans le réseau CS par : la comparaison de la liste de types de codec pris en charge par l'appelant avec la liste de types de codec pris en charge par la MGW, et à condition de savoir que les types de codec pris en charge par l'appelé incluent au moins un type de codec pris en charge par la MGW, la suppression des types de codec non pris en charge par la MGW de la liste de types de codec pris en charge par l'appelant, en ne laissant que des types de codec pris en charge par la MGW, et l'acheminement (S16-S17) de la liste ajustée de types de codec à l'appelé ; et,
l'appelé sélectionnant (S18) au moins un type de codec à partir de la liste ajustée de types de codec et informant (S18-S112) l'appelant du type de codec sélectionné, dans lequel le type de codec sélectionné par l'appelé est le type de codec multimédia négocié par l'appelant et l'appelé ;
dans d'un processus de transfert par SRVCC de l'appel de service vocal du premier réseau au second réseau, l'appelant et l'appelé réalisant (S21-S25) une communication sur la base du type de codec multimédia négocié par l'appelant et l'appelé ;
dans lequel à la fois l'appelant et l'appelé sont des utilisateurs de SRVCC.

2. Système de transfert à continuité vocale radio unique, SRVCC, comprenant un appelant, un appelé et une fonction de commande de transfert d'accès, ATCF, dans lequel,
avant le transfert par SRVCC d'un appel de service vocal d'un premier réseau à commutation de paquets PS à un second réseau à commutation de circuits CS, lors de la création d'un appel d'origine entre un appelant et un appelé dans le premier réseau, l'appelant est configuré pour transmettre une liste de types de codec pris en charge par lui-même à l'ATCF ;
l'ATCF est configurée pour ajuster la liste de types de codec pris en charge par l'appelant conformément aux types de codec pris en charge par une passerelle multimédia, MGW, à travers laquelle la communication sera établie dans le réseau CS, par :
la comparaison de la liste de types de codec pris en charge par l'appelant avec la liste de types de codec pris en charge par la MGW, et à condition de savoir que les types de codec pris en charge par l'appelé incluent au moins un type de codec pris en charge par la MGW, la suppression des types de codec non pris en charge par la MGW de la liste de types de codec pris en charge par l'appelant, en ne laissant que des types de codec pris en charge par la MGW, et l'acheminement de la liste ajustée de types de codec à l'appelé ;
l'appelé est configuré pour sélectionner au moins un type de codec à partir de la liste ajustée de types de codec et informer l'appelant du type de codec sélectionné, dans lequel le type de codec sélectionné par l'appelé est le type de codec multimédia négocié par l'appelant et l'appelé ; et
dans un processus de transfert par SRVCC de l'appel de service vocal du premier réseau au second réseau, l'appelant et l'appelé son configurés pour réaliser une communication sur la base du type de codec multimédia négocié ;
dans lequel à la fois l'appelant et l'appelé sont des utilisateurs de SRVCC.
